**Europäisches Patentamt**

(19) **European Patent Office**

**Office européen des brevets**

(11) Veröffentlichungsnummer: **0 241 035**
**A1**

(12) **EUROPÄISCHE PATENTANMELDUNG**

(21) Anmeldenummer: **87105281.7**

(22) Anmeldetag: **09.04.87**

(51) Int. Cl.³: **B 60 R 22/08**

(30) Priorität: **10.04.86 YU 571/86**

(43) Veröffentlichungstag der Anmeldung:
**14.10.87 Patentblatt 87/42**

(84) Benannte Vertragsstaaten:
**DE ES FR GB IT SE**

(71) Anmelder: **Kaplja, Drago**
**Slandrova 2**
**Y-61235 Radomlje(YU)**

(72) Erfinder: **Kaplja, Drago**
**Slandrova 2**
**Y-61235 Radomlje(YU)**

(74) Vertreter: **Klunker . Schmitt-Nilson . Hirsch**
**Winzererstrasse 106**
**D-8000 München 40(DE)**

(54) Einrichtung zum selbsttätigen Anbringen und Zuziehen eines Sicherheitsgurts in Fahrzeugen.

(57) Einrichtung zum selbsttätigen Anbringen und Zuziehen eines Y-förmigen Sicherheitsgurtes in einem PKW, mit einem Schenkel im Bereich der oberen Ecke des Türflügels und mit dem anderen Schenkel im Bereich der unteren Ecke des Türflügels. Gegenüber einer Anbaulasche (1, 5), die auf dem Türflügel (K) befestigt ist und das frei schwenkbar angeschlossene freie Ende des Schenkels (Y1, Y2) des Sicherheitsgurtes trägt, ist auf der Türzarge (P) eine Gegenlasche (10, 15) befestigt, die mit mindestens einem Dübel (11, 16) versehen ist, der beim Schliessen der Tür in eine Ausnehmung (1a, 5a) der Anbaulasche (1, 5) fällt. Auf der Anbaulasche (1, 5) ist des weiteren das freie Ende einer Drahtbiegefeder (3, 6) ortsfest gehalten, die in Richtung des zugezogenen Schenkels (Y1, Y2) des Sicherheitsgurtes weist und deren anderes Ende mit dem letzteren formschlüssig verbunden ist.

Fig.1

EP 0 241 035 A1

EINRICHTUNG ZUM SELBSTTAETIGEN ANBRINGEN UND ZUZIEHEN EINES SICHERHEITS-GURTES IN FAHRZEUGEN

Die Erfindung gehört im allgemeinen ins Gebiet der Einrichtungen oder Ausstattung in Fahrzeugen, mit welcher Verletzungen von Fahrenden in Zusammenstössen oder bei anderen Verkehrsgefahren, z.B. beim starken Bremsen, verhindert werden, ganz konkret bezieht sie sich jedoch auf das Gebiet der Beschläge für Sicherheits- oder Befestigungsgurte in Fahrzeugen.

Aus der jugoslawischen Patenanmeldung Nr. P-1606/75 ist eine Einrichtung zum Zuziehen und Nachlassen von Sicherheitsgurten für Fahrzeuge bekannt. Gegebenenfalls handelt es sich um dreischenkelige Sicherheitsgurte, deren ein Schenkel zum freien senkrechten Bord der Tür im Bereich ihrer oberen Ecke und der zweite Schenkel zum unteren Bord der Tür nahe der freien unteren Ecke der Tür angeschlossen sind. Zum Zweck des Anschliessens ist über den jeweiligen Bord der Tür eine im wesentlichen winkelförmige Befestigungslasche gelegt, die an die Türwand, wie üblich, durch Schraubenverbindung befestigt ist. An der jeweiligen Befestigungslasche wird der Schenkel des Sicherheitsgurtes durch einen ortsfesten Bolzenzapfen unlösbar aufgehängt.

Durch Versuche hatte es sich erwiesen, dass Türen, die an sich zum Ausüben der Türfunktion ausgebildet worden sind, eine plastische Deformation erleiden, wenn in den daran angeschlossenen Schenkeln des Sicherheitsgurtes Kräfte auftreten, die die Einrichtung des Sicherheitsgurtes an sich ohne weiteres aushalten kann.

Ausgehend von einer Einrichtung zur selbsttätigen Anbringung eines Sicherheitsgurtes über den Benutzer und zum selbsttätigen Zuziehen des verlegten Gurtes, wenn das Fahrzeug und der Benutzer des Sicherheitsgurtes zum Fahren bereit sind, welche Einrichtung einen dreischenkeligen Sicherheitsgurt (Y-Gurt) umfasst, dessen eine Schenkel im Bereich der oberen Ecke der Tür (d.h. des Türflügels) und der zweite Schenkel im Bereich der unteren Ecke der Tür angeschlossen sind, welche Tür mit ihrem vorderen senkrechten Bord an die Karosserie durch Scharniere befestigt ist, ist die Aufgabe der Erfindung, solche Beschläge eines derartigen Sicherheitsgurtes zu entwerfen, die gewährleisten werden, dass die Bereiche der Anschlusstellen der Sicherheitsgurtschenkel an den Türen (die an sich nicht für die Uebertragung von verhältnissmässig grossen und sepzifisch gerichteten Kräften, die im Sicherheitsgurt im kritischen Moment auftreten, dimensioniert sind) keine dauerhafte plastische Deformation erleiden.

Gemäss der Erfindung ist der untere Anschlusspunkt für den Schenkel des Sicherheitsgurtes in die eigentliche Ecke der Tür (des Türflügels) verschoben. Das Wesentliche der Lösung des Problems liegt darin, dass gegenüber jeweiliger Befestigungslasche des Türflügels an der Türzarge von innerer Seite des Fahrzeuges eine Gegenlasche befestigt ist, deren Bestandteil ein oder mehrere, aus ihrer Oberfläche rechtwinkelig nach aussen ragende Dübel sind, die bei geschlossener Tür in entsprechend angeordnete Ausnehmungen der Anbaulaschen am Türflügel passend eingreifen.

Jede von Anbaulaschen des Türflügels trägt eine ortsfest befestigte Drahtbiegefeder, die verhindert, dass der im übrigen frei schwenkbar aufgehängte Schenkel des Sicherheitsgurtes in den Türfalz gelangt.

Die Erfindung wird nachstehend anhand eines in den beigelegten Zeichnungen dargestellten Ausführungsbeispiels näher erläutert. Darin zeigen:

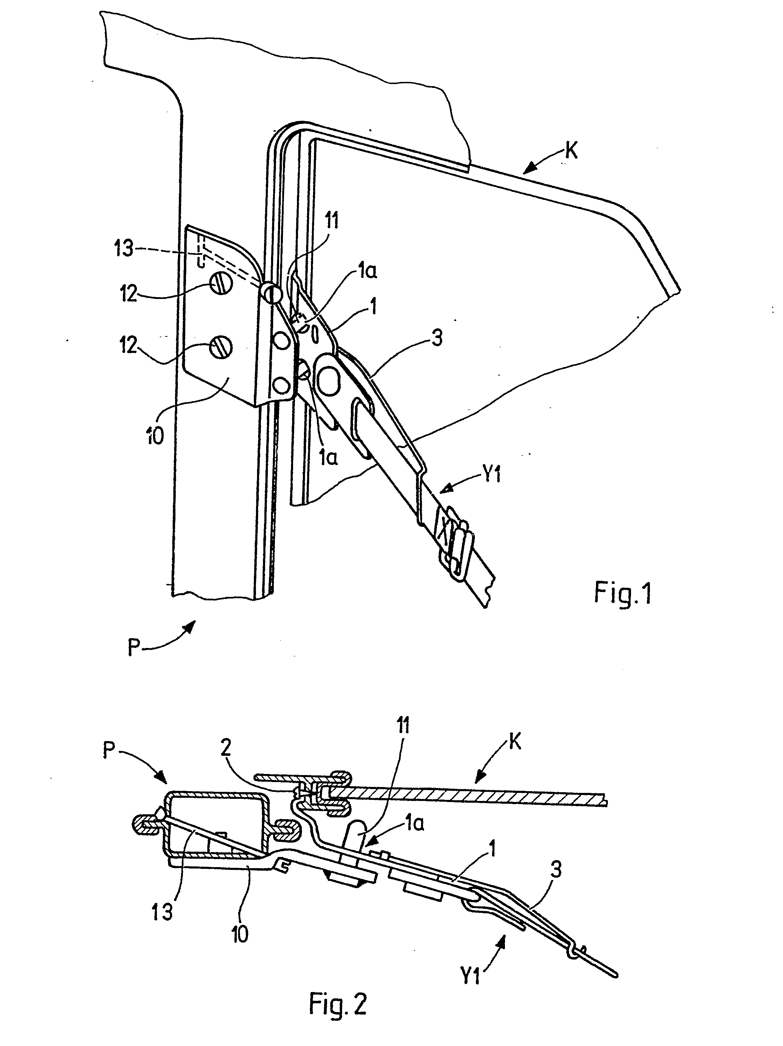

Fig. 1     ein Detail des Anschlusses des oberen Schenkels des Sicherheitsgurtes beim teilweise geschlossenen Türflügel, in räumlicher Darstellung,

Fig. 2     den Anschluss aus Fig. 1 in Draufsicht, bei geschlossener Tür,

Fig. 3     wie Fig. 1, jedoch für den Anschluss des unteren Schenkels des Sicherheitsgurtes, und

Fig. 4     den dritten, d.h. Schliess-/Löseschenkel des Y-Sicherheitsgurtes, in räumlicher Darstellung.

Im oberen Bereich des vertikalen Oeffnungsbordes des Türflügels K des Fahrzeuges ist auf den Türflügel eine blechartige Anbaulasche 1 angebaut, deren äusserer senkrechter Endabschnitt in Abhängigkeit vom Profil der Türzarge P und der Führung der Fensterscheibe des Flügels K profiliert und am Flügel mittels Schrauben 2 befestigt ist, während ihr innerer senkrechter Endabschnitt den frei schwenkbar aufgehängten Schenkel Y1 des dreischenkeligen Y-Sicherheitsgurtes trägt und ein freies Ende einer Drahtbiegefeder 3 ortsfest befestigt hält, welche Feder im wesentlichen waagerecht angeordnet ist und mit ihrem freien, schlingenförmigen Ende den Schenkel Y1 des Sicherheitsgurtes in einem Abstand vom Falzbereich der Tür hält. Im mittleren Bereich, d.h. zwischen den oben erwähnten senkrechten Endabschnitten, ist in der Anbaulasche 1 ggf. ein Paar von kreisrunden Ausnehmungen 1a vorgesehen, die übereinander angeordnet sind.

Auf der Türzarge P ist gegenüber der Anbaulasche 1 eine im wesentlichen S-förmig profilierte Gegenlasche 10 von innerer Seite des Fahrzeuges befestigt, welche Gegenlasche im Bereich gegenüber den Ausnehmungen 1a der Anbaulasche 1 mit einem Paar in die Ausnehmungen 1a eingreifenden Dübel 11 versehen ist. Es wird vorgesehen, dass gerade die Dübel 11 den Hauptteil der Beanspruchung des Schenkels Y1 des Sicherheitsgurtes übernehmen, weswegen die Gegenlasche 10 ausser mit Schrauben 12, die den Flächendruck der Gegenlasche 10 gegen die Türzarge P ausüben, noch mit mindestens einer zusätzlichen, im wesentlichen in Richtung der Beanspruchung des Schenkels Y1 weisenden Zugschraube 13 befestigt ist.

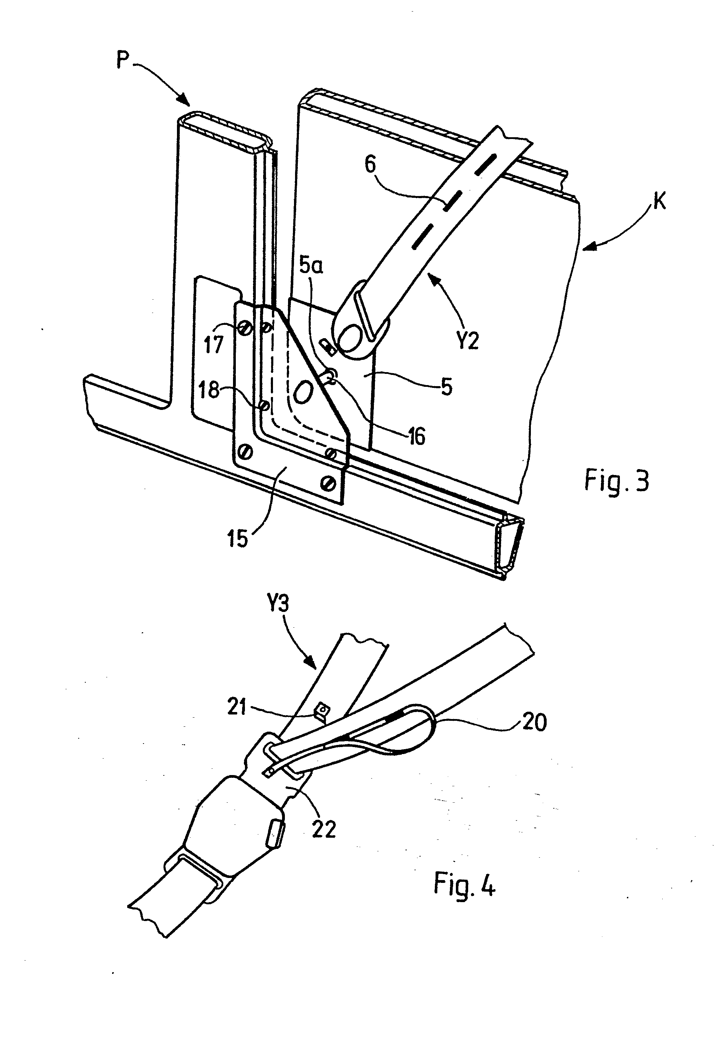

Die Konstruktionsgegebenheiten des Fahrzeuges im Bereich der unteren Türecke (Fig.3) bieten zur Anbringung der erfindungsgemässen Einrichtung günstigere Möglichkeiten. Die Anbaulasche 5 des Türflügels K stimmt der Form nach mit dem Eckbereich des Flügels K überein. Auf der Anbaulasche ist analog wie beim oberen Anschlusspunkt eine Drahtbiegefeder 6 ortsfest gehalten, die unter einer Neigung nach oben gerichtet ist in Uebereinstimmung mit dem Verlauf des Schenkels Y2 des Sicherheitsgurtes und mit letzterem flechtenartig verbunden ist. Da dieser Bereich der Tür starrer und fester als der obere Bereich ist, wird eine genügende Befestigung schon durch einen einzigen, in die Ausnehmung 5a der Anbaulasche 5 eingreifenden Dübel 16 gewährleistet.

Die Gegenlasche 15 ist auf dem stehenden und dem liegenden Arm der Türzarge P durch je drei Schrauben 17 an die innere Fläche der Zarge P und durch Schrauben 18 an den Schweissaum der Zarge P befestigt.

Selbstverständlich hängen die Profilierung und die Befestigung der Elemente der erfindungsgemässen Einrichtung jeweils von den Anschlussgegebenheiten des Fahrzeuges ab, wobei das Wesentliche der Erfindung in der Aufhängung der flügelseitigen Anbaulaschen 1,5 auf den ortsfesten Dübel 11,16 besteht.

Der dritte Schenkel Y3 des Sicherheitsgurtes Y, d.h. der Schliess-/Löseschenkel, ist mit einer Zugschlinge 20 und einem Ansatz 21 versehen, welcher Ansatz den Schenkel Y3 in unbenutztem Zustand in einem solchen Abstand von der Sitzfläche im Fahrzeug hält, dass dieser Schenkel leicht vom Benutzer ergriffen werden kann, und verhindert übermässige Bewegung des Einsteckschlüssels 22 der Schliessvorrichtung entlang den Schenkel Y3.

0241035

PATENTANSPRUECHE

1.  Einrichtung zum selbsttätigen Anbringen und Zuziehen eines Sicherheitsgurtes in einem Fahrzeug, mit einem Schenkel des dreischenkeligen, Y-Sicherheitsgurtes im Bereich der oberen Ecke des Türflügels und mit dem anderen Schenkel im Bereich der unteren Ecke des Türflügels, dadurch gekennzeichnet, dass über einer am Türflügel (K) befestigten, das frei schwenkbar angeschlossene Ende des Schenkels (Y1; Y2) des Y-Sicherheitsgurtes tragenden Anbaulasche (1; 5) auf der Türzarge (P) eine mit mindestens einem Dübel (11; 16) versehene Gegenlasche (10; 15) befestigt ist, wobei der ortsfeste Dübel (11; 16) in eine Ausnehmung (1a; 5a) der Anbaulasche (1; 5) einlangt.

2.  Einrichtung nach Anspruch 1, dadurch gekennzeichnet, dass auf der Anbaulasche (1; 5) das freie Ende einer in Richtung des zugezogenen Schenkels (Y1; Y2) des Y-Sicherheitsgurtes weisenden Drahtbiegefeder (3; 6) ortsfest gehalten ist, deren anderes Ende mit dem Schenkel (Y1; Y2) formschlüssig verbunden ist.

Fig.1

Fig.2

P

K

6

Y2

5a

17

18

16

5

15

Fig. 3

Y3

21

20

22

Fig. 4

### Europäisches Patentamt

## EUROPÄISCHER RECHERCHENBERICHT

Nummer der Anmeldung

EP 87 10 5281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-4 323 267 (TAKADA) <br> * Spalte 2, Zeilen 39-52 * | 1 | B 60 R 22/08 |
| Y | | 2 | |
| Y | US-A-4 372 579 (MATSUOKA) <br> * Spalte 3, Zeilen 1-64 * | 2 | |
| X | GB-A-2 053 662 (FUJI) <br> * Seite 1, Zeilen 100-112 * | 1 | |

RECHERCHIERTE SACHGEBIETE (Int Cl 4)

B 60 R 21/00
B 60 R 22/00

Der vorliegende Recherchenbericht wurde für alle Patentansprüche erstellt.

| Recherchenort | Abschlußdatum der Recherche | Prüfer |
|---|---|---|
| BERLIN | 03-07-1987 | STANDRING M A |